# EUROPÄISCHE PATENTANMELDUNG

(11) **EP 1 225 319 A2**
(43) Veröffentlichungstag der Anmeldung: **24.07.2002**
(21) Anmeldenummer: 01126742.4
(22) Anmeldetag: 09.11.2001
(51) Int. Cl.: F01P 7/16, F02B 75/22

(54) **Steuervorrichtung für den Kühlkreislauf einer Brennkraftmaschine**

(30) Priorität: 17.01.2001 DE 10101826
(71) Anmelder: DaimlerChrysler AG, 70567 Stuttgart (DE); Gustav Wahler GmbH u. Co.KG, 73730 Esslingen (DE)
(72) Erfinder: Schröer, Dietmar, Dipl.-Ing., 71686 Remseck (DE); Weiss, Rainer, Dipl.-Ing., 72351 Geislingen (DE); Zimmermann, Frank, Dipl.-Ing., 69168 Wiesloch (DE)
(74) Vertreter: Kratzsch, Volkhard, Dipl.-Ing.

(57) **Zusammenfassung**

Eine Steuervorrichtung für den Kühlkreislauf einer Brennkraftmaschine mit wenigstens zwei Kühlmittelteilkreisläufen, insbesondere für einen V-Motor mit zwei Zylinderbänken, weist ein Gehäuse (16), in welchem ein Steuerelement (22) drehbar angeordnet ist, wenigstens zwei Zulauföffnungen (17, 18) zu dem Gehäuse (16) und wenigstens eine Ablauföffnung (19, 20) in einer Umfangswand (16a) des Gehäuses (16) auf. Die Zulauföffnungen (17, 18) liegen in einer anderen Ebene als die Ablauföffnungen (19, 20). Das Steuerelement (22) dient zur Steuerung der Abströmung durch die Ablauföffnungen (19, 20) und ist mit einer mit der Anzahl der Ablauföffnungen (19, 20) korrespondierenden Anzahl von an seinem Umfang angeordneten Öffnungen (23, 24) versehen (Fig. 5).

## Beschreibung

Die Erfindung betrifft eine Steuervorrichtung für den Kühlkreislauf einer Brennkraftmaschine mit wenigstens zwei Kühlmittelteilkreisläufen, insbesondere für einen V-Motor mit zwei Zylinderbänken.

Aus der DE 198 09 124 A1 ist eine Steuervorrichtung für den Kühl- und Heizungskreislauf einer Brennkraftmaschine bekannt, bei der als Steuerelement ein Drehschieber innerhalb eines Ventilgehäuses angeordnet ist. Dabei führt eine Zulauföffnung in axialer Richtung in das Gehäuse und es zweigen in radialer Richtung drei Ablauföffnungen ab.

Bei den Kühlkreisläufen verschiedener Brennkraftmaschinen, insbesondere bei solchen in Reihenbauweise, können mit einer derartigen Steuervorrichtung durchaus akzeptable Ergebnisse erzielt werden, bei Brennkraftmaschinen in V-Bauweise führt die notwendige Zusammenführung der beiden Kühlmittelteilströme vor der eigentlichen Steuervorrichtung jedoch meist zu größeren Bauraumproblemen. Des weiteren ist es mit der beschriebenen Steuervorrichtung nachteiligerweise nicht möglich, sämtliche Ablauföffnungen abzusperren, so daß ständig in einem der Teilströme Kühlmittel zirkuliert.

Des weiteren beschreibt die DE 44 16 039 C1 ein Regelventil, bei welchem mittels eines als Drehschieber ausgebildeten Ventilkörpers ein Zulauf wahlweise mit bis zu drei Abläufen verbunden werden kann.

Auch mit diesem Regelventil ist es nicht möglich, zwei Kühlmittelteilströme einer Brennkraftmaschine zu regeln. Außerdem ist, wie bei der Vorrichtung gemäß der DE 198 09 124 A1, keine Stellung möglich, in der sämtliche Ablauföffnungen abgesperrt sind.

Bezüglich des weiteren Standes der Technik bei derartigen Steuervorrichtungen für Kühlkreisläufe von Brennkraftmaschinen wird des weiteren auf die EP 0 947 750 A2 und die EP 0 961 060 A1 verwiesen.

Es ist Aufgabe der vorliegenden Erfindung, eine Steuervorrichtung für den Kühlkreislauf einer Brennkraftmaschine zu schaffen, mittels welcher zwei separate Kühlmittelteilströme zusammengeführt und an voneinander unabhängige Kühlkreisläufe abgegeben werden können, wobei eine Position einnehmbar ist, in der die Steuervorrichtung komplett abgesperrt ist. Des weiteren soll die erfindungsgemäße Steuervorrichtung möglichst kein Kühlmittel unbeabsichtigt in eine der Öffnungen gelangen lassen und darüber hinaus einen möglichst geringen Bauraum beanspruchen.

Erfindungsgemäß wird diese Aufgabe durch die in Anspruch 1 genannten Merkmale gelöst.

Durch die sich erfindungsgemäß in verschiedenen Ebenen befindlichen Zulauf- und Ablauföffnungen ergibt sich ein erheblich vergrößertes Platzangebot am Umfang des Steuerelementes, wodurch die Öffnungen in dem Steuerelement genau auf die wenigstens eine Ablauföffnung abgestimmt werden können und eine sehr gute Abdichtung möglich ist. Hierdurch sind die notwendigen Schaltstellungen zur Freigabe der wenigstens einen Ablauföffnung einzeln anfahrbar und es kann darüber hinaus die jeweils einer Ablauföffnung abgegebene Kühlmittelmenge geregelt werden.

In einer vorteilhaften Weiterbildung der Erfindung kann vorgesehen sein, daß wenigstens zwei Ablauföffnungen vorgesehen sind.

Da erfindungsgemäß diese beiden Ablauföffnungen gleichzeitig abgesperrt werden können, spielt es keine Rolle, daß die Zulauföffnungen stets freigegeben sind, da die Steuerung der Abströmung ausschließlich über das Steuerelement erfolgt. Hierdurch ist es unter anderem vorteilhafterweise möglich, daß beim Übergang der Freigabe einer Ablauföffnung zur Freigabe einer anderen Ablauföffnung kein ungewolltes Abströmen von Kühlmittel über eine der Öffnungen erfolgen kann, da erfindungsgemäß beide Öffnungen mehr oder weniger unabhängig voneinander angesteuert werden.

Wenn in einer weiteren vorteilhaften Ausgestaltung der Erfindung die wenigstens zwei Zulauföffnungen in die Umfangswand des Gehäuses münden, so ist eine noch kompaktere Ausführung der erfindungsgemäßen Steuervorrichtung möglich.

Weitere vorteilhafte Ausgestaltungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: die Anordnung der erfindungsgemäßen Steuervorrichtung in einem Kühlkreislauf einer Brennkraftmaschine;
- Fig. 2: eine perspektivische Seitenansicht der erfindungsgemäßen Steuervorrichtung;
- Fig. 3: die Steuervorrichtung aus Fig. 2 im Schnitt, mit dem Steuerelement in einer ersten Stellung;
- Fig. 4: die Steuervorrichtung aus Fig. 2 im Schnitt, mit dem Steuerelement in einer zweiten Stellung;
- Fig. 5: die Steuervorrichtung aus Fig. 2 im Schnitt, mit dem Steuerelement in einer dritten Stellung; und
- Fig. 6: die Steuervorrichtung aus Fig. 2 im Schnitt, mit dem Steuerelement in einer vierten Stellung.

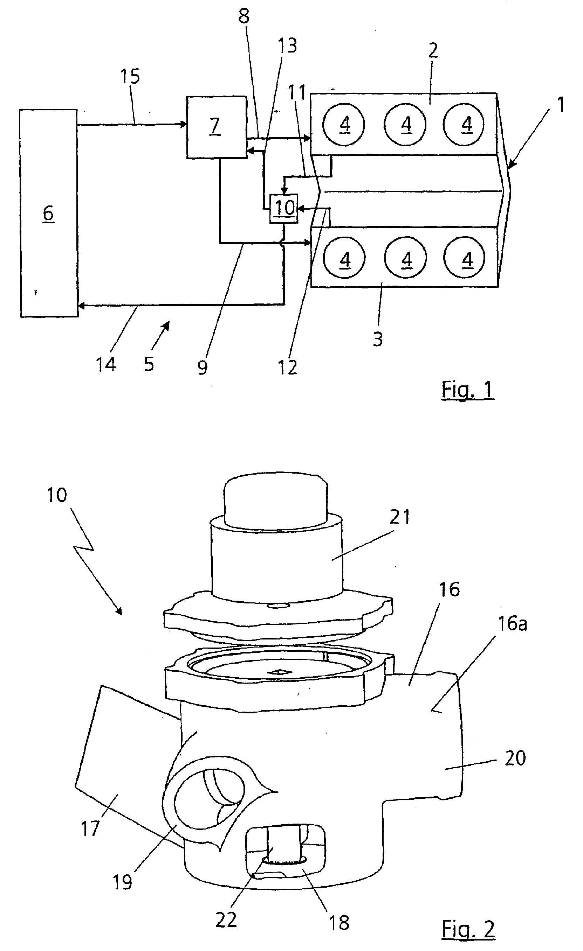

Fig. 1 zeigt in schematischer Darstellung eine Brennkraftmaschine 1 in V-Bauweise mit zwei Zylinderbänken 2 und 3, in denen sich in an sich bekannter Weise im vorliegenden Fall sechs Brennräume 4 befinden. Die Brennkraftmaschine 1 ist mit einem ebenfalls an sich bekannten Kühlkreislauf 5 versehen, in welchen ein Kühler 6 und eine Wasserpumpe 7 integriert sind. Die Wasserpumpe 7 pumpt über voneinander unabhängige Leitungen 8 und 9 Kühlmittel zu den Zylinderbänken 2 und 3 der Brennkraftmaschine 1, die jeweils nicht dargestellte Zylinderköpfe umfassen.

Des weiteren ist in dem Kühlkreislauf 5 eine Steuervorrichtung 10 vorgesehen, in welche zwei von den Zylinderbänken 2 und 3 ausgehende Leitungen 11 und 12 münden. Die beiden Leitungen 11 und 12 bilden die Verbindung von zwei separaten Kühlmittelteilströmen aus den Zylinderbänken 2 und 3 mit dem restlichen Kühlkreislauf 5. Zusätzlich verlaufen von der Steuervorrichtung 10 eine Leitung 13 zu der Wasserpumpe 7 und eine Leitung 14 zu dem Kühler 6. Schließlich ist noch der Kühler 6 mit der Wasserpumpe 7 über eine weitere Leitung 15 verbunden. Der Kühlkreislauf 5 für die Brennkraftmaschine 1 wird somit durch die Leitungen 8, 9, 11, 12, 13, 14 und 15 gebildet. Des weiteren kann auch ein Heizungskreislauf für die Brennkraftmaschine 1 vorgesehen sein, auf diesen wird jedoch im folgenden nicht näher eingegangen.

Die Figuren 2 bis 6 zeigen den Aufbau der Steuervorrichtung 10, welche zur Steuerung der Strömung innerhalb des Kühlkreislaufes 5 vorgesehen ist. So weist die Steuervorrichtung 10 ein Gehäuse 16 auf, welches mit wenigstens zwei radial eintretenden Zulauföffnungen 17 und 18 sowie mindestens einer ebenfalls radial austretenden Ablauföffnungen versehen ist. Im vorliegenden Ausführungsbeispiel sind zwei Ablauföffnungen 19 und 20 vorgesehen. Dabei treten sowohl die Zulauföffnungen 17 und 18 als auch die Ablauföffnungen 19 und 20 über eine Umfangswand 16a in die Steuervorrichtung 10 ein bzw. aus derselben aus. Von den Zulauföffnungen 17 und 18 ist in nicht dargestellter Art und Weise jeweils eine mit einer der Leitungen 11 bzw. 12 verbunden, wohingegen von den Ablauföffnungen 19 und 20 die Leitungen 13 bzw. 14 ausgehen. Die Zulauföffnungen 17 und 18 können sich dabei in verschiedenen oder in einer gemeinsamen Ebene befinden, die von einer weiteren Ebene für die Ablauföffnungen 19 und 20 verschieden ist. Auch die Ablauföffnungen 19 und 20 können, abweichend von der vorliegenden Darstellung, in verschiedenen Ebenen liegen. Alternativ hierzu wäre es auch möglich, die Zulauföffnungen 17 und 18 axial in das Gehäuse 16 eintreten zu lassen.

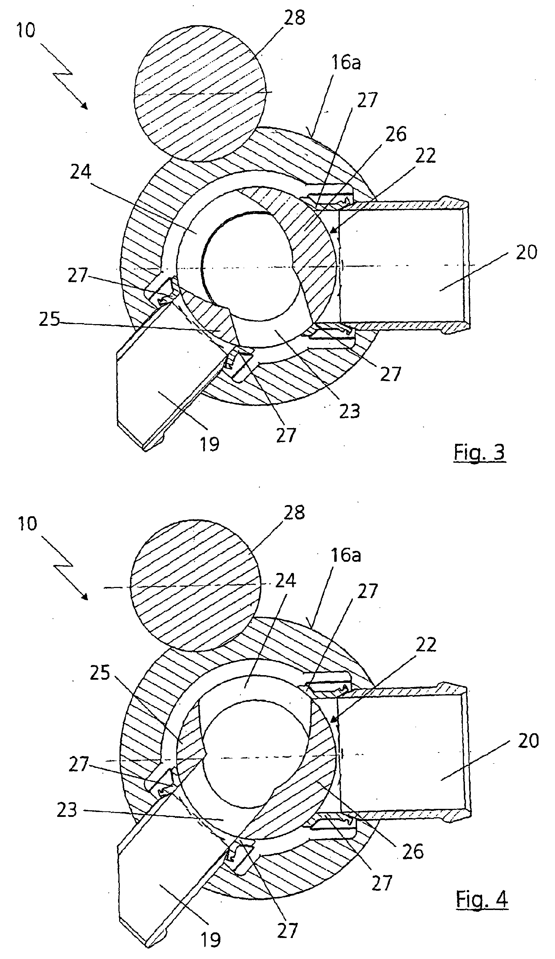

An der den Zulauföffnungen 17 und 18 gegenüberliegenden Seite ist das Gehäuse 16 mit einem Deckel 21 versehen. Innerhalb des Gehäuses 16 befindet sich ein Steuerelement 22, welches im vorliegenden Fall als Drehschieber ausgebildet ist und über ein nicht dargestelltes Thermostatventil bzw. einen Temperaturfühler gesteuert werden kann. Der Aufbau des Steuerelementes 22 geht aus den Figuren 3 bis 6 deutlicher hervor.

Das Steuerelement 22 weist an seinem Umfang zwei Öffnungen 23 und 24 sowie zwei jeweils zwischen den Öffnungen 23 und 24 liegende Sperrwände 25 und 26 auf.

Die Sperrwände 25 und 26 sind an ihren nach innen gewandten Seiten so aufgebaut, daß sie in der Lage sind, die Kühlmittelströmung zu leiten und so nur einen geringen Strömungswiderstand darstellen. In der Stellung des Steuerelementes 22 gemäß Fig. 3 verschließt die Sperrwand 25 die Ablauföffnung 19 und die Sperrwand 26 verschließt die Ablauföffnung 20. Hierbei ist die Breite bzw. der Winkel, über den die Sperrwände 25 und 26 verlaufen, jeweils derart gewählt, daß hierdurch die Ablauföffnungen 19 und 20 komplett abgesperrt werden können, so daß die Steuervorrichtung 10 gemäß Fig. 3 also komplett geschlossen ist und kein Kühlmittel strömt. Des weiteren sind an der Innenseite der Umfangswand 16a des Gehäuses 16 mehrere Dichtelemente 27 dargestellt, die zur Abdichtung der Ablauföffnungen 19 und 20 gegenüber dem Steuerelement 22 bzw. gegenüber den Sperrwänden 25 und 26 des Steuerelementes 22 dienen.

In der Stellung des Steuerelementes 22 gemäß Fig. 4 wurde dasselbe mittels einer nur schematisch angedeuteten Antriebseinrichtung 28, deren Funktionsweise im folgenden auch nicht näher erläutert wird, um einen bestimmten Winkel, hier ca. 60°, im Uhrzeigersinn gedreht. Dadurch stimmt die Öffnung 23 in dem Steuerelement 22 mit der Ablauföffnung 19 überein bzw. ist mit derselben deckungsgleich und somit kann das über die Zulauföffnungen 17 und 18 einströmende Kühlmittel die Ablauföffnung 19 verlassen. Die Ablauföffnung 19 ist im vorliegenden Fall als Kurzschlußöffnung für einen Kurzschlußkreislauf durch die beiden Zylinderbänke 2 und 3 ausgebildet, so daß in der abgebildeten Stellung des Steuerelementes 22 eine Strömung in diesem Kurzschlußkreislauf herrscht. Es ist erkennbar, daß die Größe der Öffnung 23 wenigstens annähernd der Größe der Ablauföffnung 19 entspricht, was zu einem besonders günstigen Strömungsverhalten und einer Verlustoptimierung innerhalb der Kühlmittelströmung führt. Die Sperrwand 26 ist derart ausgeführt, daß sie in dieser Stellung noch immer die Ablauföffnung 20 verschließt.

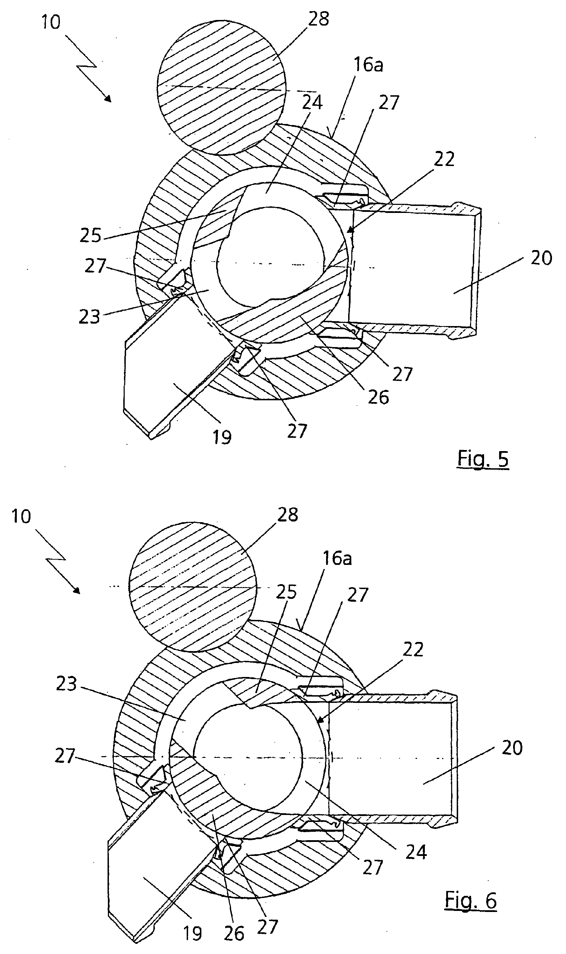

Eine um insgesamt ca. 85° gedrehte Stellung des Steuerelementes 22 zeigt Fig. 5, was dazu führt, daß sowohl die Ablauföffnung 19 als auch die Ablauföffnung 20, die zu einem Kühlerkreislauf der Brennkraftmaschine 1 führt und somit als Kühleröffnung ausgebildet ist, teilweise geöffnet sind. Hierdurch kann das über die Zulauföffnungen 17 und 18 in das Gehäuse 16 einströmende Kühlmittel durch beide Ablauföffnungen 19 und 20 abströmen und es entsteht in dem Kühlkreislauf 5 ein sogenannter Mischbetrieb. Die Sperrwand 25 hat hier, genauso wie bei der Stellung gemäß Fig. 4, keine Funktion, wohingegen die Sperrwand 26 die beiden Ablauföffnungen 19 und 20 teilweise verschließt.

Eine Stellung, in der die Ablauföffnung 20 vollständig geöffnet und die Ablauföffnung 19 komplett geschlossen ist und somit eine Strömung in dem Kühlerkreislauf stattfindet, zeigt Fig. 6. Auch hier ist erkennbar, daß die Größe und Form der Öffnung 24 wenigstens annähernd der Größe und Form der Ablauföffnung 20 entspricht. Die Öffnungen 23 und 24 stimmen also nicht nur in ihrem Winkel, den sie um den Umfang des Steuerelementes 22 einnehmen, mit den Ablauföffnungen 19 und 20 überein, sondern auch in ihrer Höhe. Die Sperrwand 26 verschließt die Ablauföffnung 19 und verhindert somit ein Abströmen des Kühlmittels in dieselbe. Zum Erreichen dieser Stellung wurde das Steuerelement 22 mittels der Antriebseinrichtung 28 um ca. 150° gedreht.

Um den Umfang des Steuerelementes 22 sind die Öffnungen 23 und 24 sowie die dazwischenliegenden Sperrwände 25 und 26 demnach so verteilt, daß wenn die Ablauföffnung 19 ganz geöffnet ist, die Ablauföffnung 20 ganz geschlossen ist und umgekehrt. Die oben erläuterten Schaltstellungen der Steuervorrichtung 10 sind dadurch einzeln und unabhängig voneinander anfahrbar, wodurch verhindert wird, daß Kühlmittel unbeabsichtigt in eine falsche Leitung gelangt. Die Rückstellung des Steuerelementes 22 erfolgt dabei entgegen dem Uhrzeigersinn.

Das vorliegende Ausführungsbeispiel der Steuervorrichtung 10 zeigt zwei Zulauföffnungen 17 und 18 sowie zwei Ablauföffnungen 19 und 20. Gegebenenfalls wäre es auch möglich, noch weitere Zu- und/oder Ablauföffnungen vorzusehen, wobei dann insbesondere im Falle weiterer Ablauföffnungen das Steuerelement 22 mit weiteren Öffnungen und weiteren Sperrwänden versehen sein müßte.

## Patentansprüche

1. Steuervorrichtung für den Kühlkreislauf einer Brennkraftmaschine mit wenigstens zwei Kühlmittelteilkreisläufen, insbesondere für einen V-Motor mit zwei Zylinderbänken, mit folgenden Merkmalen:
1.1 einem Gehäuse (16), in welchem ein Steuerelement (22) drehbar angeordnet ist,
1.2 wenigstens zwei Zulauföffnungen (17,18) zu dem Gehäuse (16),
1.3 wenigstens einer Ablauföffnung (19,20) in einer Umfangswand (16a) des Gehäuses (16),
1.4 die wenigstens zwei Zulauföffnungen (17,18) liegen in einer anderen Ebene als die wenigstens eine Ablauföffnung (19,20),
1.5 das Steuerelement (22) dient zur Steuerung der Abströmung durch die wenigstens eine Ablauföffnung (19,20) und ist mit einer mit der Anzahl der Ablauföffnungen (19,20) korrespondierenden Anzahl von an seinem Umfang angeordneten Öffnungen (23,24) versehen.

2. Steuervorrichtung nach Anspruch 1,
**dadurch gekennzeichnet, daß**
wenigstens zwei Ablauföffnungen (19,20) vorgesehen sind.

3. Steuervorrichtung nach Anspruch 2,
**dadurch gekennzeichnet, daß**
die wenigstens zwei Ablauföffnungen (19,20) in einer gemeinsamen Ebene liegen.

4. Steuervorrichtung nach Anspruch 1, 2 oder 3,
**dadurch gekennzeichnet, daß**
das Steuerelement (22) als Drehschieber ausgebildet ist.

5. Steuervorrichtung nach einem der Ansprüche 1 bis 4,
**dadurch gekennzeichnet, daß**
die wenigstens zwei Zulauföffnungen (17,18) in die Umfangswand (16a) des Gehäuses (16) münden, vorzugsweise innerhalb einer gemeinsamen Ebene.

6. Steuervorrichtung nach einem der Ansprüche 1 bis 4,
**dadurch gekennzeichnet, daß**
die wenigstens zwei Zulauföffnungen (17,18) in axialer Richtung in das Gehäuse (16) münden.

7. Steuervorrichtung nach einem der Ansprüche 2 bis 6,
**dadurch gekennzeichnet, daß**
eine der wenigstens zwei Ablauföffnungen (19,20) als Kurzschlußöffnung für einen Kurzschlußkreislauf durch die beiden Zylinderbänke (2,3) ausgebildet ist, und daß eine andere der wenigstens zwei Ablauföffnungen (19,20) als Kühleröffnung für einen Kühlerkreislauf zu einem an der Brennkraftmaschine (1) angeschlossenen Kühler (6) ausgebildet ist.

8. Steuervorrichtung nach einem der Ansprüche 1 bis 7,
**dadurch gekennzeichnet, daß**
die Größe der Öffnungen (23,24) am Umfang des Steuerelementes (22) wenigstens annähernd der Größe der Ablauföffnungen (19,20) entspricht.

9. Steuervorrichtung nach einem der Ansprüche 1 bis 8,
**dadurch gekennzeichnet, daß**
an der Innenseite der Umfangswand (16a) des Gehäuses (16) Dichtelemente (27) zur Abdichtung der wenigstens einen Ablauföffnung (19,20) gegenüber dem Steuerelement (22) angeordnet sind.
